Europäisches Patentamt

European Patent Office

Office européen des brevets

(19)

(11) Veröffentlichungsnummer : **0 230 282 B1**

(12) # EUROPÄISCHE PATENTSCHRIFT

(45) Veröffentlichungstag der Patentschrift :
23.01.91 Patentblatt 91/04

(51) Int. Cl.⁵ : **C08L 67/02**, C08L 69/00,
// (C08L67/02, 51:00),
(C08L69/00, 51:00)

(21) Anmeldenummer : 87100486.7

(22) Anmeldetag : 16.01.87

(54) **Thermoplastische Formmassen.**

Die Akte enthält technische Angaben, die nach dem Eingang der Anmeldung eingereicht wurden und die nicht in dieser Patentschrift enthalten sind.

(30) Priorität : 20.01.86 DE 3601421

(43) Veröffentlichungstag der Anmeldung :
29.07.87 Patentblatt 87/31

(45) Bekanntmachung des Hinweises auf die Patenterteilung :
23.01.91 Patentblatt 91/04

(84) Benannte Vertragsstaaten :
BE DE FR GB NL

(56) Entgegenhaltungen :
EP-A- 0 030 618
EP-A- 0 142 675

(73) Patentinhaber : **BASF Aktiengesellschaft
Carl-Bosch-Strasse 38
D-6700 Ludwigshafen (DE)**

(72) Erfinder : **Mckee, Graham Edmund, Dr.
Kastanienweg 8
D-6940 Weinheim (DE)**
Erfinder : **Simon, Georg Nikolaus, Dr.
Untere Hart 10
D-6703 Limburgerhof (DE)**
Erfinder : **Lausberg, Dietrich, Dr.
Nachtigalstrasse 32 a
D-6700 Ludwigshafen (DE)**
Erfinder : **Kleber, Friedrich
Hermann-Hesse-Strasse 5
D-6520 Worms 25 (DE)**
Erfinder : **Schlichting, Karl, Dr.
Virchowstrasse 12
D-6712 Bobenheim-Roxheim (DE)**

## Beschreibung

Die Erfindung betrifft thermoplastische Formmassen, enthaltend

A) 50-99 Gew.-% eines Polyalkylenterephthalats und/oder eines Polycarbonats und

B) 1-50 Gew.-% eines elastomeren Polymeren mit Epoxy- oder Carboxylgruppen an der Oberfläche,

C) >0 bis 60 Gew.-%, bezogen auf A) + B), an üblichen Zusatzstoffen sowie aus diesen Formmassen hergestellte Formteile.

Der Zusatz von kautschukelastischen Polymerisaten zu thermoplastischen Polyestern zur Verbesserung der Schlagzähigkeit ist an sich bekannt.

In der DE-A 23 48 377 werden Pfropfpolymere mit einem inneren Kern, der aus Butadien aufgebaut ist, und einer äußeren Pfropfhülle aus Styrol/Methylmethacrylat beschrieben, die sich zur Erhöhung der Schlagzähigkeit von Polyestern eignen.

In der US-A 4 283 326 werden Abmischungen aus Polyester, Glimmer und Kautschuk beschrieben, wobei der Kautschuk eine harte äußere Hülle und eine Glasübergangstemperatur von mindestens 20°C aufweist. Gegebenenfalls können Epoxygruppen an der Oberfläche der äußeren Hülle vorhanden sein. Ähnlich werden in der DE-A 2 650 870 Mischungen aus Polyestern und Mehrstufenpolymerisaten beschrieben. Diese sind aus einer kautschukartigen ersten Stufe mit einer Glasübergangstemperatur von unter 10°C und einer letzten, epoxygruppenhaltigen Stufe mit einer Glasübergangstemperatur von mindestens 50°C aufgebaut, so daß sich eine Filmbildungstemperatur des Polymerisats von mindestens 50°C ergibt. Diese Mehrstufenpolymerisate sind also keine kautschukartigen Polymerisate mehr. Außerdem haben die in der US-A 4 283 326 bzw. DE-A 2 650 870 beschriebenen Formmassen den Nachteil, daß wegen der harten Pfropfhülle der den Polyestern zugesetzten Polymerisate die mechanischen Eigenschaften, insbesondere die Schlagzähigkeit (auch bei biaxialer Beanspruchung) nicht zufriedenstellend sind.

In der DE-A 2 622 876 werden Formmassen aus Polyestern oder Polycarbonaten und kautschukartigen Polymerisaten mit Epoxy- oder Carboxylgruppen an der Oberfläche beschrieben. Die kautschukartigen Polymerisate haben Schmelzindices im Bereich von 0,5-1000 g/10 min nach DIN 53 735 (190°C, 2,16 kg Belastung) und sollen fein verteilt sein. über die Bedeutung eines hohen Gelgehalts finden sich keinerlei Hinweise. Außerdem sind auch die mechanischen Eigenschaften dieser Formmassen und insbesondere deren Lösungsmittelbeständigkeit nicht befriedigend. Außerdem können bei der Herstellung von großflächigen Formen schichtweise Spaltungen (Delaminierungen) auftreten und die Lackierbarkeit von Formkörpern aus diesen Formmassen ist nicht zufriedenstellend.

In der EP-A 142 675 werden Formmassen aus Polyestern und Pfropfkautschuken beschrieben, die einen bestimmten Ankopplungsgrad aufweisen. Bevorzugte Pfropfkautschuke sind solche mit Methylmethacrylat, Styrol/Acrylnitril- oder Styrol/Methylmethacrylat-Mischungen als Pfropfmonomere.

Aufgabe der vorliegenden Erfindung war es daher, Formmassen aus Polyestern und/oder Polycarbonaten und elastomeren Polymeren zur Verfügung zu stellen, die sich durch gute Schlagzähigkeit (auch biaxial), insbesondere bei tiefen Temperaturen, verbesserte Fließfähigkeit, hohe Oberflächengüte und eine gute Lackierbarkeit auszeichnen.

Überraschenderweise wurde nun gefunden, daß diese Aufgabe durch thermoplastische Formmassen enthaltend

A) 50-99 Gew.-% eines Polyalkylenterephthalats und/oder eines Polycarbonats und

B) 1-50 Gew.-% eines elastomeren Polymeren mit Epoxygruppen von polymerisierbaren Carbonsäuren abgeleiteten Alkalimetall-, Erdalkalimetalloder Ammoniumsalzgruppen, von Maleinsäureanhydrid abgeleiteten Anhydridgruppen und/oder Carboxylgruppen an der Oberfläche gelöst werden kann, die dadurch gekennzeichnet sind, daß die Komponente B) ein durch Emulsions-polymerisation hergestelltes Pfropfpolymeres ist und eine Glasübergangstemperatur von unter 0°C sowie einen Gelgehalt von mindestens 50%, bestimmt in Tetrahydrofuran oder Toluol bei 25°C, aufweist,

C) >0 bis 60 Gew.-%, bezogen auf A) + B), an üblichen Zusatzstoffen.

Bevorzugte Massen dieser Art sind den Unteransprüchen zu entnehmen.

Die erfindungsgemäßen thermoplastischen Formmassen zeichnen sich besonders durch eine gute Schlagzähigkeit (insbesondere biaxiale Schlagzähigkeit) und Oberflächengüte aus und lassen sich gut lackieren.

Die als Komponente A verwendeten Polyalkylenterephthalate weisen eine viskositätszahl von vorzugsweise 80-170, insbesondere 110-150 ml/g, gemessen an einer 0,5%igen Lösung in Phenol/o-Dichlorbenzol (1 : 1) nach DIN 53 726/8 bei 25°C mit einem Ubbelohde-Viskosimeter auf. Bevorzugte Polyalkylenterephthalate leiten sich von Alkandiolen mit 2-6 Kohlenstoffatomen ab. Die Polyester können auch bis zu 10 Mol.-% Anteile, die sich von anderen Dicarbonsäuren als Terephthalsäure, wie Isophthalsäure, Alkandicarbonsäuren mit 5 bis 36 Kohlenstoffatomen, Naphthalindicarbonsäuren, halogenierten aromatischen Dicarbonsäuren ableiten oder auch verzweigte Alkandiole, wie Neopentylglykol, 1 oder 2 Methylbutandiol-1,4, 2-Ethylhexandiol-1,6, Dimethylbutandiol, enthalten. Darüber hinaus können die verwendeten Polyester auch bis zu 1 Mol.-% drei- oder höherwertige Polycarbonsäuren oder Polyole, wie Pyromellitsäure, Trimellitsäure, Trimethylolpropan oder Pentaerythrit enthalten.

Besondere technische Bedeutung haben Polyethylenterephthalat und Polybutylenterephthalat oder deren Mischungen und Copolymerisate erlangt.

Die erfindungsgemäß verwendeten aromatischen Polycarbonate (Komponente A) sind an sich bekannt. Sie können z.B. entsprechend dem verfahren der DE-C- 1 300 266 durch Grenzflächenpolykondensation oder gemäß dem verfahren der DE-A- 1 495 730 durch Umesterung von Diphenylcarbonat mit Bisphenol A hergestellt werden. Anstelle von Bisphenol A können z.B. bis zu 30 Mol.-% andere aromatische Bis-hydroxy-Verbindungen verwendet werden, insbesondere 2,2-Di-(4-hydroxyphenyl)-pentan, 2,6-Dihydroxynaphthalin, Di-(4-hydroxyphenyl)-sulfon, Di-(4-hydroxyphenyl)-ether, Di-(4-hydroxyphenyl)-sulfid, Di-(4-hydroxyphenyl)-methan, 1,1-Di-(4-hydroxyphenyl)-ethan oder 4,4'-Dihydroxydiphenyl.

Für den erfindungsgemäßen Zweck geeignete Polycarbonate weisen eine relative Viskosität (gemessen bei 25°C an einer 0,5 gew.-%igen Lösung in Dichlormethan) von vorzugsweise 1,2 bis 1,5, insbesondere von 1,28 bis 1,40 auf.

Der Anteil der Komponente A an den erfindungsgemäßen Formmassen beträgt 50 bis 99, vorzugsweise 70 bis 97 Gew.-%. Die Komponente A kann sowohl aus Polyestern oder Polycarbonaten allein oder auch aus Mischungen dieser Polymerarten in beliebigem verhältnis bestehen.

Als Komponente B enthalten die erfindungsgemäßen Formmassen 1 bis 50, vorzugsweise 3 bis 30 Gew.-% eines durch Emulsionspolymerisation hergestellten elastomeren Pfropfpolymeren mit einer Glasübergangstemperatur von unter 0°C und einem Gelgehalt (gemessen in Tetrahydrofuran oder Toluol bei 25°C) von mindestens 50, vorzugsweise mindestens 70%, welches an der Oberfläche die in Anspruch 1 genannten Gruppen aufweist.

Für die Erfindung ist dabei wesentlich, daß die haftvermittelnden Epoxy-und/oder Carboxylgruppen (bzw. die im folgenden den Carboxylgruppen zugeordneten Gruppen an der Oberfläche vorhanden sind und daß der Gelgehalt mindestens 50% beträgt. Die Epoxy- und/oder Carboxylgruppen wirken als Haftvermittler zwischen dem Polyester und/oder Polycarbonat und dem Pfropfpolymeren. Ob diese Haftvermittlung auf der Bildung kovalenter chemischer Bindungen oder auf physikalischen Wechselwirkungen (von der Waals, Dipol-Dipol etc.) beruht, kann noch nicht mit Sicherheit gesagt werden.

Der hohe Gelgehalt des elastomeren Polymerisats bringt eine verbesserung der mechanischen Eigenschaften und der Oberflächengüte der Formmassen mit sich. Der hohe Gelgehalt bringt es auch mit sich, daß die Fließfähigkeit der Polymeren B) nur sehr gering ist, so daß ein Schmelzindex häufig unter normalen Bedingungen nicht bestimmbar ist. Die Polymeren zeigen vielmehr ein elastisches Verhalten, d.h. sie reagieren auf die Einwirkung einer formverändernden Kraft mit einer elastischen Rückstellkraft (vgl. B. vollmert, Grundriß der makromolekularen Chemie, Bd. IV, S. 85 ff, E. Vollmert, Verlag Karlsruhe 1979).

Bedingt durch ihre Herstellung in Emulsion liegen die Teilchen der Komponente B) als vernetzte Dispersionsteilchen vor.

Die elastomeren Pfropfpolymere, die aus einem in Emulsion hergestellten Kautschuk mit einer Glasübergangstemperatur von unter 0°C aufgebaut sind, und an der Oberfläche Epoxy- oder Carboxylgruppen aufweisen, können durch Emulsionspolymerisation in an sich bekannter Weise, wie sie z.B. in Houben-Weyl, Methoden der organischen Chemie, Band XII. I (1961) beschrieben wird, hergestellt werden. Die verwendbaren Emulgatoren und Katalysatoren sind an sich bekannt.

Nur stellvertretend seien hier als Monomere für die Herstellung des Kautschuks Acrylate wie z.B. n-Butylacrylat und 2-Ethylhexylacrylat, Methacrylat, Butadien und Isopren genannt. Diese Monomeren können auch mit anderen Monomeren wie z.B. Styrol, Acrylnitril und Vinylethern copolymerisiert werden. Bevorzugt sind Komponenten B) mit einem inneren Kern, der aus mindestens 50% Butadien aufgebaut ist.

Monomere, die eine Kopplung an die Komponente A) bewirken können. sind solche, die (I) Epoxy und/oder (II) Carboxyl-Gruppen enthalten. Beispiele für solche Monomeren sind für (I) Methacrylsäureglycidylester, Acrylsäureglycidylester, Allylglycidylether, Vinylglycidylether und Itaconsäureglycidylester, und für (II) Acrylsäure, Methacrylsäure und ihre Metall-, insbesondere Alkalimetallsalze, Ammoniumsalze, Maleinsäure, Maleinsäureanhydrid, Metallsalze des sauren Monoethylesters der Maleinsäure, Fumarsäure, Fumarsäuremonoethylester, Itaconsäure, vinylbenzoesäure, vinylphthalsäure, Salze von Fumarsäuremonoethylester, Monoester von Maleinsäure, Fumarsäure und Itaconsäure mit Alkoholen ROH, wobei R bis zu 29 Kohlenstoffatome aufweist, z.B. Methyl, Propyl, Isopropyl, Butyl, Isobutyl, Hexyl, Cyclohexyl, Octyl, 2-Ethylhexyl, Decyl, Stearyl, Methoxyethyl, Ethoxyethyl und Hydroxyethyl.

Maleinsäureanhydrid und Metallsalze (insbesondere Alkalimetall und Erdalkalimetallsalze) von polymerisierbaren Carbonsäuren weisen zwar keine freien Carboxylgruppen auf, kommen aber in ihrem Ver-

3

halten den freien Säuren nahe, so daß sie hier von dem Oberbegriff carboxylgruppenhaltige Monomere mit umfaßt werden sollen.

Die durch Emulsionspolymerisation hergestellten Pfropfpolymere (Dispersionspolymeren) können mehrschalig sein, z.B. kann der Kern und die äußere Schale gleich sein, außer daß die äußere Schale zusätzliche Gruppen enthält, die eine Haftung der Komponente A) ermöglicht. Beispiele dafür sind ein innerer Kern aus n-Butylacrylat und eine äußere Schale aus n-Butylacrylat und Glycidylmethacrylat, oder ein innerer Kern aus Butadien und einer äußeren Schale aus Butadien und Glycidylmethacrylat. Der Kern und die Schale können jedoch auch verschieden aufgebaut sein, z.B. ein innerer Kern aus Butadien und eine äußere Schale aus n-Butylacrylat und Glycidylmethacrylat.

Natürlich kann der Kautschuk homogen aufgebaut sein, z.B. einschalig aus einem Copolymer von n-Butylacrylat und Glycidylmethacrylat oder Butadien und Glycidylmethacrylat.

Die Kautschukteilchen können auch vernetzt sein. Als Vernetzer wirkende Monomere sind beispielsweise Divinylbenzol, Diallylphthalat und Dihydrodicyclopentadienylacrylat. Der Anteil dieser Vernetzer an der Komponente B) beträgt vorzugsweise unter 5 Gew.-%, bezogen auf B).

Neben den vorgenannten elastomeren Pfropfpolymeren B können die erfindungsgemäßen Formmassen auch noch andere Kautschuke, inebesondere Ethylen-copolymere enthalten, die ebenfalls - allerdings nicht zwingend - Epoxy-oder Carboxylgruppen enthalten können.

Als Komponente C) enthalten die erfindungsgemäßen Formmassen >0 bis 60 Gew.-%, bezogen auf A) + B), Zusatzstoffe, wie z.B. Füllstoffe, weitere verträgliche Kunststoffe, Farbstoffe, Pigmente, Antistatika, Antioxidantien, Flammschutzmittel und Schmier mittel, um nur einige zu nennen. Unter den Füllstoffen werden häufig solche mit verstärkender Wirkung wie z.B. Glasfasern, Asbest, Wollastonit, Glimmer, Talkum, Kreide und Glaskugeln, bevorzugt verwendet. Diese Zusatzstoffe werden bevorzugt Mengen bis zu 30 Gew.-% bezogen auf A) + B) verwendet.

Die Herstellung der Komponenten kann durch Mischen der Komponenten in an sich bekannter Weise erfolgen. Geeignete Mischvorrichtungen sind bekannt, weshalb sich hier detaillierte Angaben erübrigen.

Bedingt durch die Herstellung des Pfropfpolymeren in Emulsion ist es häufig vorteilhaft, das Lösungsmittel (meist Wasser) vor dem Vermischen der Komponenten zu entfernen. Es ist jedoch auch möglich, die wäßrige Dispersion direkt, beispielsweise über einen Extruder, der Polymerschmelze zuzuführen und das Wasser entlang des Extruders, beispielsweise durch Entgasungsschnecken abzuziehen. Es versteht sich von selbst, daß für dieses Verfahren auch teilweise entwässerte Dispersionen (z.B. feuchte Krümel) geeignet sind.

In vielen Fällen hat es sich als vorteilhaft herausgestellt, zuerst Mischungen aus Elastomer und Polyester und/oder Polycarbonat herzustellen, wobei die gewünschten Zusatzstoffe anschließend in einer zweiten Stufe zugegeben werden.

Bei der Verwendung von feuchten Elastomeren bzw. Elastomeren in Dispersion ist dies besonders vorteilhaft, da dadurch der Vicat-Erweichungspunkt der Mischung erhöht wird.

Die erfindungsgemäßen Formmassen eignen sich gut zur Herstellung von großflächigen Formkörpern, ohne daß dabei Delaminierungserscheinungen auftreten. Auch lassen sich Formkörper aus den erfindungsgemäßen Formmassen leicht lackieren.

## Beispiele

Herstellung der Komponente B

Die Komponenten $B_1$-$B_4$ wurden durch Emulsionspolymerisation hergestellt, wobei zunächst 70 Gew.-% Butadien in Gegenwart von 0,7 Gew.-% t-Dodecylmercaptan polymerisiert wurden. Auf diesen inneren Kern wurde dann eine äußere Schale aus 30 Gew.-% n-Butylacrylat bzw. n-Buylacrylat/Glycidylmethacrylat aufpolymerisiert. (Summe aus Butadien und äußerer Schale = 100%). Zwischen der ersten und der zweiten Stufe erfolgte eine gezielte Agglomeration der ca. 0,1 μm großen Teilchen durch Zugabe einer Ethylacrylat-Methacrylamid-Copolymerdispersion (2 Gew.-% feste Bestandteile bezogen auf feste Bestandteile der ersten Stufe ; aufgebaut aus 96 Gew.-% Ethylacrylat und 4% Methacrylamid). Die Anteile (in Gew.-%) von n-Butylacrylat und Glycidylmethacrylat sind der folgenden Tabelle 1 zu entnehmen.

EP 0 230 282 B1

Tabelle 1

| Komponente | $B_1$ | $B_2$ | $B_3$ | $B_4$ |
|---|---|---|---|---|
| n-Butylacrylat | 95 | 92,5 | 90 | 100 |
| Glycidylmethacrylat | 5 | 7,5 | 10 | 0 |

Der Feststoffgehalt der Dispersion betrug 40%, die Teilchengröße lag zwischen 0,1 und 0,7 μm. Die Glasübergangstemperatur der inneren Schale lag bei circa 80°C, die der äußeren Schale bei –40°C und die Filmbildungstemperatur unter 0°C.

Herstellung der Komponenten B5-B7

Bei der Herstellung dieser Pfropfpolymere wurden zunächst 70 Gew.-% eines 98 : 2 Gemischs aus n-Butylacrylat und Dihydrodicyclopentadienylacrylat als innerer Kern polymerisiert, auf den in einer zweiten Stufe 30 Gew.-% n-Butylacrylat oder n-Butylacrylat/Glycidylmethacrylat in den in Tabelle 2 aufgeführten Verhältnissen aufpolymerisiert wurden.

Tabelle 2    (Angaben in Gew.-%)

| Komponente | $B_5$ | $B_6$ | $B_7$ |
|---|---|---|---|
| n-Butylacrylat | 95 | 92,5 | 100 |
| Glycidylmethacrylat | 5 | 7,5 | 0 |

Der Feststoffgehalt der Dispersion betrug 40%, die Teilchengröße lag bei 0,3 μm (monodispers) und die Glasübergangstemperatur von innerer und äußerer Schale lag bei –40°C. Die Filmbildungstemperatur betrug weniger als 0°C.

Zur Bestimmung des Gelgehalts der eingesetzten Kautschuke wurden diese ausgefällt und bei 70°C und einem Druck von 25 kPa 24 h getrocknet. Anschließend wurde jeweils ein Gramm des Kautschuks in 100 ml Lösungsmittel bei 23°C 24 h geschüttelt und anschließend das entstandene Gel abzentrifugiert.

Der Gelgehalt in % wurde nach folgender Beziehung ermittelt.

$$\text{Gelgehalt} = \frac{\text{Gewicht des Gels nach Extraktion mit Lösungsmittel und Trocknung}}{\text{Einwaage in das Lösungsmittel}}$$

Bei der Verwendung von Tetrahydrofuran (THF) und Toluol als Lösungsmittel lagen die Gelgehalte in jedem Fall über 50%.

Die vorstehend beschriebenen Komponenten $B_1$-$B_7$ wurden mit Polyestern und/oder Polycarbonaten im Extruder gemischt um die erfindungsgemäßen Formmassen zu erhalten. Dabei wurden folgende Komponenten A eingesetzt :

$A_1$ Polybutylenterephthalat mit einer spezifischen Viskosität von 1,65, gemessen an einer 0,5%igen Lösung in Phenol(o-Dichlorbenzol (1 : 1) bei 25°C nach DIN 53 726/8,

$A_2$ Polycarbonat auf Basis von 2,2-Di-(4-hydroxyphenyl)-propan mit einer relativen Viskosität von 1,36 gemessen an einer 0,5%igen Lösung in Dichlormethan bei 25°C.

Bei einigen Beispielen (8-16) wurden Talkum und/oder ein Ethylen/n-Butylacrylat/Acrylsäure-Terpolymer (65/30/5) mit einem Schmelzindex von 15 g/10 min (190°C, 2,16 kg Belastung) zugesetzt.

Die Ergebnisse der Kerbschlagzähigkeits-, Lochkerbschlagzähigkeits- und Schädigungsarbeitmessungen und die Zusammensetzung der Formmassen sind den Tabellen 4 und 5 zu entnehmen.

5

Tabelle 4    Beispiele 1 - 7    (in diesen Beispielen betrug der Anteil der
Komponente A stets 80 Gew.-% $A_1$)

| Beispiel | Komponente B | Kerbschlag-zähigkeit $kJ/m^2$ 23°C | Lochkerbschlag-zähigkeit $kJ/m^2$ -20°C | Plastechon-Prüfung-Schädigungsarbeit Nm 23°C |
|---|---|---|---|---|
| 1 | $B_1$ | 50 | 85 | 46 |
| 2 | $B_2$ | 55 | 87 | 49 |
| 3 | $B_3$ | 51 | 75 | 47 |
| 4* | $B_4$ | 9 | 30 | 19 |
| 5 | $B_5$ | 33 | 81 | 44 |
| 6 | $B_6$ | 45 | 82 | 49 |
| 7* | $B_7$ | 6 | 50 | 27 |

*) Vergleichsbeispiele

Tabelle 5    Polyester-Polycarbonat-Elastomer-Abmischungen

| Bsp. | Komp. B | Komp. $A_2$ | Komp. $A_1$ | Komp. B | Zusammensetzung (Gew.-%) Ethylen-n-Butylacrylat-acrylsäure-Copolymer (D) | C) Talkum bezogen auf A)- D) | Kerbschlagzähigkeit $kJ/m^2$ 23°C | -20°C | -40°C | Vicat Temp. °C |
|------|---------|-------------|-------------|---------|-----|-----|------|------|------|------|
| 8    | $B_1$ | 50 | 40 | 6  | 4 | 0,1 | 65 | 41 | 11 | 125 |
| 9    | $B_2$ | 50 | 40 | 6  | 4 | 0,1 | 67 | 43 | 12 | 125 |
| 10   | $B_3$ | 50 | 40 | 6  | 4 | 0,1 | 64 | 44 | 10 | 125 |
| 11*  | $B_4$ | 50 | 40 | 6  | 4 | 0,1 | 40 | 12 | 5  | 125 |
| 12   | $B_5$ | 50 | 40 | 6  | 4 | 0,1 | 63 | 40 | -  | 125 |
| 13   | $B_6$ | 50 | 40 | 6  | 4 | 0,1 | 68 | 39 | -  | 125 |
| 14*  | $B_7$ | 50 | 40 | 6  | 4 | 0,1 | 36 | 9  | -  | 125 |
| 15   | $B_2$ | 50 | 40 | 10 |   | 0,5 | 61 | 30 | 10 | 138 |
| 16*  | $B_4$ | 50 | 40 | 10 |   | 0,5 | 30 | 8  | 3  | 138 |

*) Vergleichsbeispiele

Die Ergebnisse zeigen, daß sich die erfindungsgemäßen Formmassen sich durch eine gute Schlagzähigkeit auch bei tiefen Temperaturen auszeichnen.

## Ansprüche

1. Thermoplastische Formmassen, enthaltend

A) 50-99 Gew.% eines Polyalkylenterephthalats und/oder eines Polycarbonats und

B) 1-50 Gew.% eines elastomeren Polymeren mit Epoxygruppen, von polymerisierbaren Carbonsäuren abgeleiteten Alkalimetall-, Erdalkalimetall- oder Ammoniumsalzgruppen, von Maleinsäureanhydrid abgeleiteten Anhydridgruppen und/oder Carboxylgruppen an der Oberfläche,

C) >0 bis 60 Gew.-%, bezogen auf A) + B), an üblichen Zusatzstoffen, dadurch gekennzeichnet, daß die Komponente B) ein durch Emulsionspolymerisation hergestelltes Pfropfpolymeres ist und eine Glasübergangstemperatur von unter 0°C sowie einen Gelgehalt von mindestens 50%, gemessen in Tetrahydrofuran oder Toluol bei 25°C, aufweist.

2. Thermoplastische Formmassen nach Anspruch 1, dadurch gekennzeichnet, daß der Gelgehalt der Komponente B) mindestens 70% beträgt.

3. Thermoplastische Formmassen nach den Ansprüchen 1 und 2, dadurch gekennzeichnet, daß die Komponente B) einen inneren Kern, der aus mindestens 50% Butadien aufgebaut ist, aufweist.

4. Formkörper, hergestellt aus Formmassen nach den Ansprüchen 1 bis 3.

## Revendications

1. Matières à mouler thermoplastiques, qui contiennent

A) de 50 à 99% en poids d'un poly(téréphtalate d'alkylène) et/ou d'un polycarbonate,

B) de 1 à 50% en poids d'un polymère élastomère avec, en surface, des radicaux époxyde, des radicaux sel d'ammonium, sel de métal alcalino-terreux ou sel de métal alcalin dérivés d'acides carboxyliques polymérisables, des radicaux carboxyle et/ou des radicaux anhydride dérivés de l'anhydride maléique et

C) plus de 0 à 60% en poids, par rapport à A) + B), d'additifs usuels, caractérisées en ce que le composant B) est un polymère de greffage préparé par polymérisation en émulsion et présente une température de transition vitreuse inférieure à 0°C et une teneur en gel d'au moins 50%, telle que mesurée à 25°C dans le tétrahydrofuranne ou le toluène.

2. Matières à mouler thermoplastiques suivant la revendication 1, caractérisées en ce que la teneur en gel du composant B) atteint au moins 70%.

3. Matières à mouler thermoplastiques suivant les revendications 1 et 2, caractérisées en ce que le composant B) comporte un noyau interne constitué d'au moins 50% de butadiène.

4. Articles ou corps moulés, fabriqués à partir des matières à mouler suivant les revendications 1 à 3.

## Claims

1. A thermoplastic molding composition which contains

A) 50-99% by weight of a polyalkylene terephthalate or of a polycarbonate,

B) 1-50% by weight of an elastomeric polymer having epoxy groups, alkali metal, alkaline earth metal or ammonium salt groups derived from a polymerizable carboxylic acid, anhydride groups derived from maleic anhydride, or carboxyl groups, at the surface, and

C) > 0-60% by weight, based on A) + B), of customary additives, wherein component B) is a graft polymer prepared by emulsion polymerization and has a glass transition temperature of below 0°C and a gel content of not less than 50%, measured in tetrahydrofuran or toluene at 25°C.

2. A thermoplastic molding composition as claimed in claim 1, wherein the gel content of component B) is not less than 70%.

3. A thermoplastic molding composition as claimed in claim 1 or 2, wherein component B) has an inner core which is based on not less than 50% of butadiene.

4. A molding prepared from a molding composition as claimed in any of claims 1 to 3.